# EUROPEAN PATENT SPECIFICATION

(11) **EP 2 338 697 B1**
(45) Date of publication and mention of the grant of the patent: **05.09.2012**
(21) Application number: 10195653.0
(22) Date of filing: 17.12.2010
(51) Int. Cl.: B60C 1/00, B60C 11/00, C08K 7/00, C08L 7/00, C08L 9/00

(54) **Tire with a component containing carbon nanotubes**
Reifen mit Komponente aus Kohlennanoröhrchen
Pneu doté d'un composant contenant des nanotubes en carbone

(30) Priority: 21.12.2009 US 643242
(43) Date of publication of application: 29.06.2011
(60) Divisional application: 12177082.0
(73) Proprietor: The Goodyear Tire & Rubber Company, Akron, OH 44316-0001 (US)
(72) Inventor: Schmitz, Frank, L-7782, Bissen (LU); Thielen, Georges Marcel Victor, L-4995, Schouweiler (LU); Costantini, Nicola, L-1260, Luxembourg (LU); Agostini, Giorgio, L-7733, Colmar-Berg (LU); Lambert, Isabelle Lea Louise Marie, B-6700, Arlon (BE); D'Sidocky, Richard Michael, Ravenna, OH 44266 (US); Gordon, Larry Ashley, Akron, OH 44312 (US); Yang, Xiaoping, Streesboro, OH 44241 (US); Hahn, Bruce Raymond, Hudson, OH 44236 (US); Dando, Rebecca Lee, Uniontown, OH 44685 (US); Varner, John Eugene, Norton, OH 44203 (US); Haller, Leslie Allen, Georgetown, OH 45121 (US)
(74) Representative: Kutsch, Bernd

(56) References cited:
- EP-A2- 1 085 046
- WO-A1-03/060002
- DE-A1-102007 056 689
- JP-A- 2009 046 547
- KR-B1- 100 635 604
- US-A1- 2006 061 011
- US-A1- 2009 011 318
- US-B1- 6 476 154

## Description

### Background of the Invention

It is sometimes desired to provide a tire with a combination of reduced rolling resistance, and therefore improved fuel economy for an associated vehicle, as well as reduced heat buildup, and therefore improved heat durability for the tire itself.

To promote such desirable properties of a tire, it is sometimes desired to reduce the hysteretic nature of various tire rubber components.

Such reduction in hysteresis (e.g. reduction in rubber physical rebound property) of various rubber compositions for tire components may be accomplished, for example, by altering their carbon black contents, either through reduction in the amount of carbon black or by using higher surface area carbon black, with concomitant increase in silica reinforcement.

However, significant reduction in carbon black content of rubber components a tire, whether by simple carbon black reduction or by replacing a significant portion of carbon black reinforcement with silica reinforcement, promotes an increased electrical resistance, or reduced electrical conductivity, of a respective tire component which may significantly increase electrical resistance to passage of static electricity between a tire's bead region and running surface of its tread, particularly as the carbon black content of a rubber composition falls below what as known as a percolation point.

It would therefore be advantageous to have a rubber composition with reduced carbon black content but with a sufficiently low resistivity to maintain the composition above its percolation point.

US-A- 5,877,110 describes carbon fibrils having a morphology of vermicular tubes.

DE-A-10 2007 056 689 describes a tire having a tire tread comprising a rubber composition comprising a diene based rubber, from 1-30 phr of carbon nanotubes and from 5-60 phr of carbon black together with 5-100 phr of silica.

US-A- 2006/0061011, WO-A- 03/060002, KR-B1- 10-0635604 and JP-A-2009-046547 describe further rubber compositions comprising carbon nanotubes.

US-A- 2009/0011318, EP-A- 1 085 046 and US-B1- 6,476,154 describe electrically conductive rubber compositions.

### Summary of the Invention

The present invention is directed to a tire component in accordance with claim 1 and to a method in accordance with claim 11.

Dependent claims refer to preferred embodiments of the invention.

In a preferred aspect, the present invention is directed to a method of conducting static electricity in a pneumatic tire, the method comprising the steps of mixing a rubber compound comprising at least one diene based rubber, from 15 to 30 phr of silica, preferably precipitated silica, less than 40 phr of carbon black, and from 1 to 10 phr of carbon nanotubes having a length of at least 1 or, preferably, at least 5 microns; forming a tire component from the rubber compound; and including the tire component in the tire; wherein the volume resistivity of the tire component is less than 1 x 10⁹ Ohm-cm as measured by ASTM D257-98.

In a preferred aspect, the invention is further directed to a pneumatic tire comprising a tire component, preferably a tire component, comprising a rubber compound comprising at least one diene based rubber, from 15 to 30 phr of silica, preferably precipitated silica, less than 40 phr of carbon black, and from 1 to 10 phr of carbon nanotubes having a length of at least 1 or, preferably, at least 5 microns; wherein the volume resistivity of the tire component is less than 1 x 10⁹ ohm-cm as measured by ASTM D257-98.

In a preferred aspect of the invention, the tire component is such that it has a sufficient electric conductivity for use in the carcass of the tire, to conduct static electricity so that the tire is electrostatically discharged during operation. This is achieved typically at least when the tire component has a volume resistivity of 5 x 10⁷ Ohm-cm or less as measured by ASTM D257-98. Preferably, the volume resistivity is less than 1 x 10⁷ Ohm-cm.

The tire component of the invention preferably comprises less than 40 phr of carbon black, more preferably less than 30 phr of carbon black.

### Brief Description of the Drawing

FIG. - 1 is a graph of volume resistivity for several rubber samples.
FIG. - 2 is a graph of volume resistivity for several rubber samples.

### Detailed Description of the Invention

As a comparative example, there is disclosed a method of conducting static electricity in a pneumatic tire, comprising the steps of mixing a rubber compound comprising at least one diene based rubber, from 15 to 30 phr of silica or from 60 to 150 phr of silica, and from 1 to 10 phr of carbon nanotubes having a length of at least 1 or at least 5 microns; forming a tire tread from the rubber compound; and including the tire tread in the tire; wherein the volume resistivity of the tire tread is less than 1 x 10⁹ Ohm-cm as measured by ASTM D257-98.

As a comparative example, there is further disclosed a pneumatic tire comprising a tread, the tread comprising a rubber compound comprising at least one diene based rubber, from 60 to 150 phr of precipitated silica, and from 1 to 10 phr of carbon nanotubes having a length of at least 1 or at least 5 microns; wherein the volume resistivity of the tire tread is less than 1 x 10⁹ Ohm-cm as measured by ASTM D257-98.

Carbon nanotubes are tubes made of carbon having an outer diameter in a range of from 5 nm to 40 nm, preferably 5 nm to 20 nm. The inner diameter of the tubes is preferably in a range of from 2 to 25 nm such as 2 nm to 6 nm. The nanotubes have a length of at least 1 micron and preferably a length in a range of from 1 to 50 microns such as from 1 to 20 microns of from 5 to 15 microns.

The rubber composition includes carbon nanotubes.

In one embodiment, the carbon nanotubes are carbon nanotubes with a nested structure of from 3 to 15 walls. In one embodiment, the carbon nanotubes may have and outer diameter ranging from 5 to 20 nanometers and an inner diameter ranger from 2 to 6 nanometers. In one embodiment, the carbon nanotubes may have a length greater than 1 micron.

In one embodiment, the carbon nanotubes are produced from high purity, low molecular weight hydrocarbons in a continuous, gas phase, catalyzed reaction. They are parallel, multi-walled carbon nanotubes. The outside diameter of the tube is approximately 10 nanometers and the length is over 10 microns. As produced, the carbon nanotubes are intertwined together in agglomerates but may be dispersed using various techniques as are known in the art.

In one embodiment, the rubber composition includes from 0.5 to 5 parts by weight, per 100 parts by weight of elastomer (phr), of carbon nanotubes. In one embodiment, the rubber composition includes from 1 to 3 phr of carbon nanotubes.

Suitable multi-wall carbon nanotubes are available commercially from Bayer as Baytubes® and from Hyperion Catalysis International as Fibril™.

Tires with a tread made with a rubber composition including the carbon nanotubes show low volume resistivity, indicating good ability to conduct static electricity. In one comparative example, the rubber composition and tread has a volume resistivity that is less than 1 x 10⁹ Ohm-cm as measured by ASTM D257-98. In one comparative example, the rubber composition and tread has a volume resistivity that is less than 1 x 10⁵ Ohm-cm as measured by ASTM D257-98.

The rubber composition may be used with rubbers or elastomers containing olefinic unsaturation. The phrases "rubber or elastomer containing olefinic unsaturation" or "diene based elastomer" are intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are polyisoprene (natural or synthetic), polybutadiene and SBR.

In one aspect the rubber is preferably of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/ butadiene (E-SBR) might be used having a relatively conventional styrene content of 20 to 28 percent bound styrene or, for some applications, an E-SBR having a medium to relatively high bound styrene content, namely, a bound styrene content of 28 to 45 percent.

By emulsion polymerization prepared E-SBR, it is meant that styrene and 1,3-butadiene are copolymerized as an aqueous emulsion. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

The term "phr" as used herein, and according to conventional practice, refers to "parts by weight of a respective material per 100 parts by weight of rubber, or elastomer."

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition may include from 60 to 150 phr of silica. In another embodiment, from 80 to 120 phr of silica may be used. In an other embodiment, 15 to 30 phr of silica may be used.

The commonly employed siliceous pigments which may be used in the rubber compound include conventional pyrogenic and precipitated siliceous pigments (silica). In one embodiment, precipitated silica is used. The conventional siliceous pigments employed in this invention are precipitated silicas such as, for example, those obtained by the acidification of a soluble silicate, e.g., sodium silicate.

Such conventional silicas might be characterized, for example, by having a BET surface area, as measured using nitrogen gas. In one embodiment, the BET surface area may be in the range of 40 to 600 square meters per gram. In another embodiment, the BET surface area may be in a range of 80 to 300 square meters per gram. The BET method of measuring surface area is described in the Journal of the American Chemical Society, Volume 60, Page 304 (1930).

The conventional silica may also be characterized by having a dibutylphthalate (DBP) absorption value in a range of 100 to 400, alternatively 150 to 300.

Various commercially available silicas may be used, such as, only for example herein, silicas commercially available from PPG Industries under the Hi-Sil trademark with designations 210 and 243; silicas available from Rhodia, with, for example, designations of Z1165MP and Z165GR and silicas available from Degussa AG with, for example, designations VN2 and VN3.

Commonly employed carbon blacks can be used as a conventional filler. In one embodiment, carbon black is used in an amount less than 40 phr. In another embodiment, less than 20 phr of carbon black is used. In another embodiment, less than 10 phr of carbon black is used. In one embodiment, the rubber composition is exclusive of carbon black. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

Other fillers may be used in the rubber composition including, particulate fillers including ultra high molecular weight polyethylene (UHMWPE), crosslinked particulate polymer gels including those disclosed in US-A- 6,242,534; US-A-6,207,757; US-A- 6,133,364; US-A- 6,372,857; US-A- 5,395,891; or US-A-6,127,488, and plasticized starch composite filler including that disclosed in US-A-5,672,639. Such other fillers may be used in an amount ranging from 1 to 30 phr.

In one embodiment the rubber composition may contain a conventional sulfur containing organosilicon compound. Examples of suitable sulfur containing organosilicon compounds are of the formula:

Z-Alk-Sn-Alk-Z I

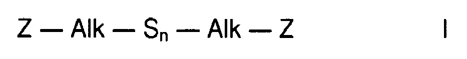

in which Z is selected from the group consisting of 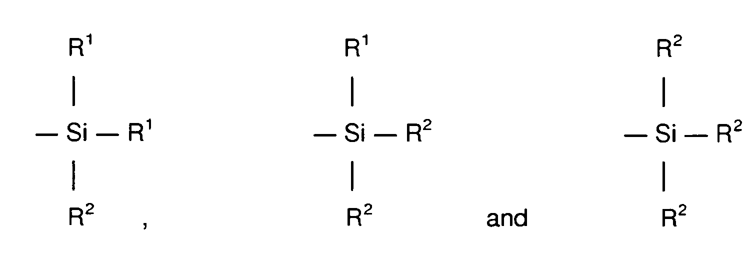 where R¹ is an alkyl group of 1 to 4 carbon atoms, cyclohexyl or phenyl; R² is alkoxy of 1 to 8 carbon atoms, or cycloalkoxy of 5 to 8 carbon atoms; Alk is a divalent hydrocarbon of 1 to 18 carbon atoms and n is an integer of 2 to 8.

In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula I, Z may be 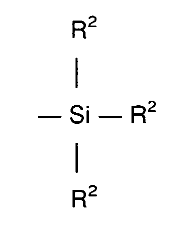 where R² is an alkoxy of 2 to 4 carbon atoms, alternatively 2 carbon atoms; alk is a divalent hydrocarbon of 2 to 4 carbon atoms, alternatively with 3 carbon atoms; and n is an integer of from 2 to 5, alternatively 2 or 4.

In another embodiment, suitable sulfur containing organosilicon compounds include compounds disclosed in US-A- 6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT™from Momentive Performance Materials.

In another embodiment, suitable sulfur containing organosilicon compounds include those disclosed in US-A- 2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr. Typical amounts of tackifier resins, if used, comprise 0.5 to 10 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4. In another embodiment, combinations of a primary and a secondary accelerator might be used with the secondary accelerator being used in smaller amounts, such as from 0.05 to 3 phr, in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat or innerliner.

The pneumatic tire of the present invention may be a race tire, passenger tire, aircraft tire, agricultural, earthmover, off-the-road, or truck tire. In one embodiment, the tire is a passenger or truck tire. The tire may be a radial or bias tire.

Vulcanization of the pneumatic tire of the present invention is generally carried out at conventional temperatures ranging from 100°C to 200°C. Any of the usual vulcanization processes may be used such as heating in a press or mold, heating with superheated steam or hot air. Such tires can be built, shaped, molded and cured by various methods which are known and will be readily apparent to those having skill in such art.

The invention is further illustrated by the following example.

### Example 1

In this example, the effect of adding multi-wall carbon nanotubes to a carbon black containing rubber composition is illustrated. Rubber samples were made using a two-stage mixing procedure with a basic recipe as given in Tables 1. Amounts of carbon black and carbon nanotubes were varied as given in Table 2.

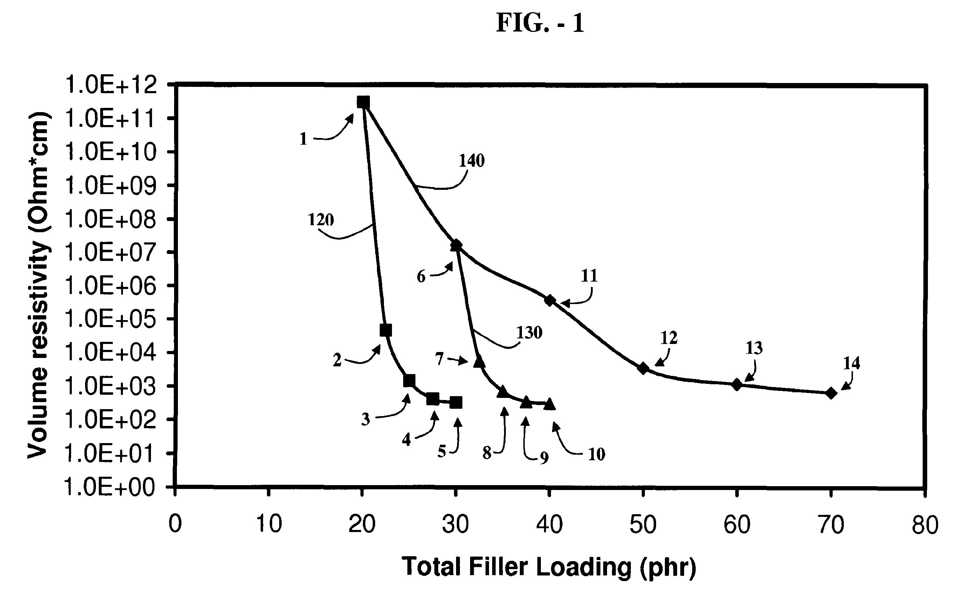

The samples were tested for electrical resistivity following ASTM D 257-98. Results are shown in FIG. 1.

**Table 1**

| **Non Productive Mix Step** | |
|---|---|
| Natural Rubber | 100 |
| Carbon Black | variable as per Table 2 |
| Antidegradant | 1 |
| Process Oil | 2 |
| Zinc Oxide | 5 |
| Stearic Acid | 0.5 |
| Carbon Nanotubes ¹ | variable as per Table 2 |

| **Productive Mix Step** | |
|---|---|
| Antidegradant | 2.5 |
| Accelerator | 1.35 |
| Sulfur | 1.75 |
| Retarder | 0.1 |

| | |
|---|---|
| ¹ Baytubes® from Bayer | |

With reference now to FIG. 1, line 120 illustrates addition of 2.5 to 10 phr of carbon nanotubes to compositions containing 20 phr of carbon black (data points 1 through 5, corresponding to Samples 1 through 5) results in low volume resistivity with less than 30 phr total filler loading. Similar results are illustrated by line 130, with compositions containing 30 phr of carbon black (data points 6 through 10, corresponding to Samples 6 through 10). By contrast and as illustrated by line 140, for compositions containing only carbon black, equivalently low volume resistivity is achieved only at total filler loading of up to 70 phr (data points 11 through 14, corresponding to Samples 11 through 14).

**Table 2**

| **Sample No.** | **Carbon Nanotubes, phr** | **Carbon Black, phr** |
|---|---|---|
| 1 | 0 | 20 |
| 2 | 2.5 | 20 |
| 3 | 5 | 20 |
| 4 | 7.5 | 20 |
| 5 | 10 | 20 |
| 6 | 0 | 30 |
| 7 | 2.5 | 30 |
| 8 | 5 | 30 |
| 9 | 7.5 | 30 |
| 10 | 10 | 30 |
| 11 | 0 | 40 |
| 12 | 0 | 50 |
| 13 | 0 | 60 |
| 14 | 0 | 70 |

### Example 2

In this example, the effect of adding multi-wall carbon nanotubes to a carbon black and silica- containing rubber composition is illustrated. Rubber samples were made using a multi-stage mixing procedure with a basic recipe as given in Table 3. Amounts of carbon black, silica and carbon nanotubes were varied as given in Table 4.

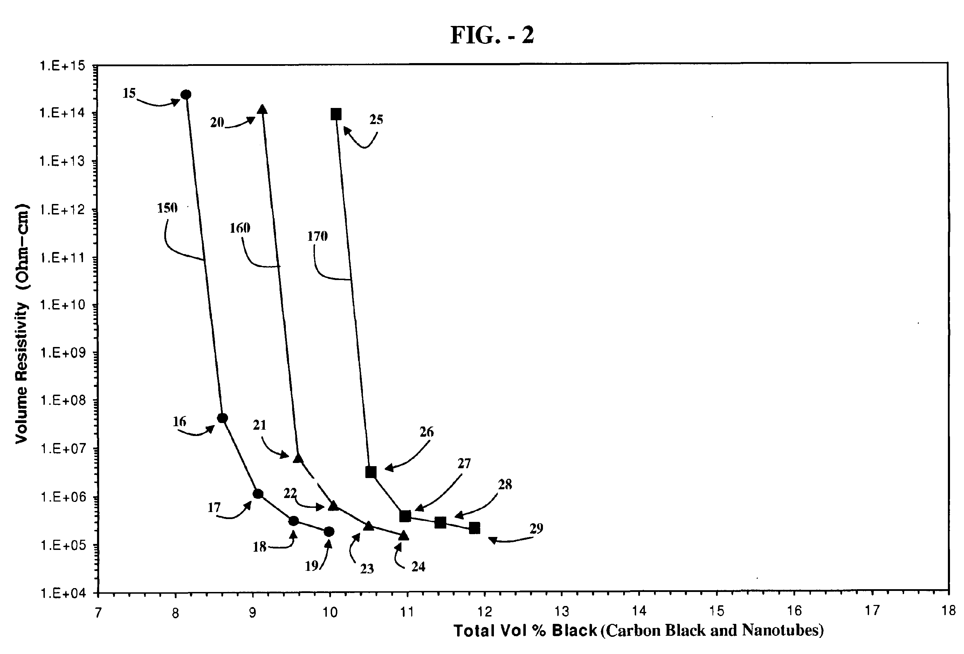

The samples were tested for electrical resistivity following ASTM D 257-98. Results are shown in FIG. 2.

**Table 3**

| **Non Productive Mix Steps** | |
|---|---|
| Natural Rubber | 90 |
| Polybutadiene | 10 |
| Carbon Black | variable as per Table 4 |
| Silica | variable as per Table 4 |
| Silane Coupling Agent | variable as per Table 4 |
| Waxes | 1.5 |
| Antidegradant | 1 |
| Process Oil | 2 |
| Zinc Oxide | 2 |
| Stearic Acid | 2 |
| Carbon Nanotubes² | variable as per Table 4 |

| **Productive Mix Step** | |
|---|---|
| Antidegradant | 1 |
| Accelerator | 1.45 |
| Sulfur | 2.4 |

| | |
|---|---|
| ² Fibril® carbon nanotubes from Hyperion Catalysis International | |

**Table 4**

| | **Carbon Black** | | **Silica** | **Silane** | **Nanotubes** | |
|---|---|---|---|---|---|---|
| **Sample No.** | **phr**. | **Vol %** | **phr** | **phr** | **phr** | **Vol%** |
| 15 | 20 | 8.15 | 20 | 3.2 | 0 | 0 |
| 16 | 20 | 8.11 | 20 | 3.2 | 1.23 | 0.5 |
| 17 | 20 | 8.07 | 20 | 3.2 | 2.48 | 1 |
| 18 | 20 | 8.03 | 20 | 3.2 | 3.74 | 1.5 |
| 19 | 20 | 7.99 | 20 | 3.2 | 5.01 | 2 |
| 20 | 23 | 9.14 | 23 | 3.68 | 0 | 0 |
| 21 | 23 | 9.09 | 23 | 3.68 | 1.26 | 0.5 |
| 22 | 23 | 9.05 | 23 | 3.68 | 2.54 | 1 |
| 23 | 23 | 9.00 | 23 | 3.68 | 3.83 | 1.5 |
| 24 | 23 | 8.95 | 23 | 3.68 | 5.14 | 2 |
| 25 | 26 | 10.07 | 26 | 4.16 | 0 | 0 |
| 26 | 26 | 10.02 | 26 | 4.16 | 1.3 | 0.5 |
| 27 | 26 | 9.97 | 26 | 4.16 | 2.61 | 1 |
| 28 | 26 | 9.92 | 26 | 4.16 | 3.93 | 1.5 |
| 29 | 26 | 9.87 | 26 | 4.16 | 5.27 | 2 |

With reference now to FIG. 2, a similar effect on volume resistivity is observed, as was observed in FIG. 1. Line 150 illustrates addition of 0 to 2 weight percent of carbon nanotubes to compositions containing 20 phr of carbon black and 20 phr of silica (data points 15 through 19, corresponding to Samples 15 through 19) results in low volume resistivity with less than 10 volume percent total carbon black and carbon nanotubes. Similar results are illustrated by line 160, with compositions containing 23 phr of carbon black and 23 phr of silica (data points 20 through 24, corresponding to Samples 20 through 24), and for line 170, with compositions containing 26 phr of carbon black and 26 phr of silica (data points 25 through 29, corresponding to Samples 25 through 29).

Alternative embodiments of the invention include in the composition of Tables 3 and 4 a silica, content in a range of from 50 phr to 150 phr such as 60, 65 or 70 phr of silica together with a respectively increased amount of silane.

The rubber compositions may be free of carbon black or comprise carbon black only in a range f from 5 to 35 phr, preferably 10 to 30 phr, of carbon black.

## Claims

1. A tire component comprising a rubber compound comprising at least one diene based rubber and from 0.5 to 20 phr of carbon nanotubes having a length of at least 1 micron, wherein the volume resistivity of the tire component is less than 1 x 10⁹ Ohm-cm as measured by ASTM D257-98, wherein the tire component is a tire carcass, and wherein the rubber compound comprises silica in a range of from 15 to 30 phr.

2. The tire component of claim 1 wherein the wherein the volume resistivity of the tire component is less than 1 x 10⁷ Ohm-cm as measured by ASTM D257-98.

3. The tire component of claim 1 wherein the wherein the volume resistivity of the tire component is less than 1 x 10⁶ Ohm-cm as measured by ASTM D257-98.

4. The tire component of claim 1 wherein the wherein the volume resistivity of the tire component is less than 1 x 10⁵ Ohm-cm as measured by ASTM D257-98.

5. The tire component of at least one of the previous claims wherein the rubber compound comprises 1 to 8 phr of carbon nanotubes.

6. The tire component of at least one of the previous claims wherein the rubber compound comprises 1 to 5 phr or 1 to 2.5 phr of carbon nanotubes.

7. The tire component of at least one of the previous claims wherein the carbon nanotubes have an outer diameter in a range of from 5 nm to 40 nm, preferably 5 to 20 nm; and/or wherein the carbon nanotubes have an inner diameter in a range of from 2 to 25 nm, preferably 2 to 6 nm.

8. The tire component of at least one of the previous claims wherein the carbon nanotubes have a length of at least 5 microns, alternatively at least 10 microns.

9. The tire component of at least one of the previous claims wherein the rubber compound:
(i) comprises less than 40 phr of carbon black; or
(ii) comprises less than 20 phr of carbon black; or
(iii) comprises less than 10 phr of carbon black; or
(iv) comprises carbon black in a range of from 5 to 35 phr; or
(v) comprises carbon black in a range of from 10 to 30 phr; or
(vi) is exclusive of carbon black.

10. The tire component of at least one of the previous claims wherein the silica is precipitated silica.

11. A method of manufacturing a pneumatic tire comprising a tire component in accordance with at least one of the previous claims, the method comprising:
(i) mixing the rubber compound;
(ii) forming the tire component using the rubber compound; and
(iii) including the tire component in a pneumatic tire.

## Patentansprüche

1. Reifenbauteil, umfassend eine Gummimischung, welche mindestens einen dienbasierten Kautschuk und 0,5 bis 20 ThK Kohlenstoff-Nanoröhren mit einer Länge von mindestens 1 Mikron umfasst, wobei der spezifische Durchgangswiderstand des Reifenbauteils weniger als 1 x 10⁹ Ohm-cm beträgt, gemessen durch ASTM D257-98, wobei das Reifenbauteil eine Reifenkarkasse ist und wobei die Gummimischung Silika in einem Bereich von 15 bis 30 ThK umfasst.

2. Reifenbauteil nach Anspruch 1, wobei der spezifische Durchgangswiderstand des Reifenbauteils weniger als 1 x 10⁷ Ohm-cm beträgt, gemessen durch ASTM D257-98.

3. Reifenbauteil nach Anspruch 1, wobei der spezifische Durchgangswiderstand des Reifenbauteils weniger als 1 x 10⁶ Ohm-cm beträgt, gemessen durch ASTM D257-98.

4. Reifenbauteil nach Anspruch 1, wobei der spezifische Durchgangswiderstand des Reifenbauteils weniger als 1 x 10⁵ Ohm-cm beträgt, gemessen durch ASTM D257-98.

5. Reifenbauteil nach mindestens einem der vorgenannten Ansprüche, wobei die Gummimischung 1 bis 8 ThK Kohlenstoff-Nanoröhren umfasst.

6. Reifenbauteil nach mindestens einem der vorgenannten Ansprüche, wobei die Gummimischung 1 bis 5 ThK oder 1 bis 2,5 ThK Kohlenstoff-Nanoröhren umfasst.

7. Reifenbauteil nach mindestens einem der vorgenannten Ansprüche, wobei die Kohlenstoff-Nanoröhren einen Außendurchmesser in einem Bereich von 5 nm bis 40 nm, bevorzugt 5 bis 20 nm, aufweisen; und/oder wobei die Kohlenstoff-Nanoröhren einen Innendurchmesser in einem Bereich von 2 bis 25 nm, bevorzugt 2 bis 6 nm, aufweisen.

8. Reifenbauteil nach mindestens einem der vorgenannten Ansprüche, wobei die Kohlenstoff-Nanoröhren eine Länge von mindestens 5 Mikron, alternativ mindestens 10 Mikron, aufweisen.

9. Reifenbauteil nach mindestens einem der vorgenannten Ansprüche, wobei die Gummimischung:
(i) weniger als 40 ThK Carbon Black umfasst; oder
(ii) weniger als 20 ThK Carbon Black umfasst; oder
(iii) weniger als 10 ThK Carbon Black umfasst; oder
(iv) Carbon Black in einem Bereich von 5 bis 35 ThK umfasst; oder
(v) Carbon Black in einem Bereich von 10 bis 30 ThK umfasst; oder
(vi) unter Ausschluss von Carbon Black ist.

10. Reifenbauteil nach mindestens einem der vorgenannten Ansprüche, wobei das Silika ausgefälltes Silika ist.

11. Verfahren zur Herstellung eines Luftreifens, der ein Reifenbauteil in Übereinstimmung mit mindestens einem der vorgenannten Ansprüche umfasst, wobei das Verfahren umfasst:
(i) Mischen der Gummimischung;
(ii) Formen des Reifenbauteils unter Verwendung der Gummimischung; und
(iii) Einfügen des Reifenbauteils in einen Luftreifen.

## Revendications

1. Composant de bandage pneumatique comprenant un composé de caoutchouc comprenant au moins un caoutchouc à base diénique et à concurrence de 0,5 à 20 phr, des nanotubes en carbone possédant une longueur d'au moins 1 micron, la résistivité en volume du composant de bandage pneumatique étant inférieure à 1 x 10⁹ Ohm-cm, telle qu'on la mesure via la norme ASTM D257-98, le composant de bandage pneumatique étant une carcasse de bandage pneumatique et le composé de caoutchouc comprenant de la silice dans la plage de 15 à 30 phr.

2. Composant de bandage pneumatique selon la revendication 1, dans lequel la résistivité en volume du composant de bandage pneumatique est inférieure à 1 x 10⁷ Ohm-cm, telle qu'on la mesure via la norme ASTM D257-98.

3. Composant de bandage pneumatique selon la revendication 1, dans lequel la résistivité en volume du composant de bandage pneumatique est inférieure à 1 x 10⁶ Ohm-cm, telle qu'on la mesure via la norme ASTM D257-98.

4. Composant de bandage pneumatique selon la revendication 1, dans lequel la résistivité en volume du composant de bandage pneumatique est inférieure à 1 x 10⁵ Ohm-cm, telle qu'on la mesure via la norme ASTM D257-98.

5. Composant de bandage pneumatique selon au moins une des revendications précédentes, dans lequel le composé de caoutchouc comprend des nanotubes en carbone à concurrence de 1 à 8 phr.

6. Composant de bandage pneumatique selon au moins une des revendications précédentes, dans lequel le composé de caoutchouc comprend des nanotubes en carbone à concurrence de 1 à 5 phr ou à concurrence de 1 à 2,5 phr.

7. Composant de bandage pneumatique selon au moins une des revendications précédentes, dans lequel les nanotubes en carbone possèdent un diamètre externe dans la plage de 5 nm à 40 nm, de préférence dans la plage de 5 à 20 nm ; et/ou dans lequel les nanotubes en carbone possèdent un diamètre externe dans la plage de 2 nm à 25 nm, de préférence dans la plage de 2 à 6 nm.

8. Composant de bandage pneumatique selon au moins une des revendications précédentes, dans lequel les nanotubes en carbone possèdent une longueur s'élevant à au moins 5 microns, en variante à au moins 10 microns.

9. Composant de bandage pneumatique selon au moins une des revendications précédentes, dans lequel le composé de caoutchouc :
(i) comprend du noir de carbone à concurrence de moins de 40 phr ; ou
(ii) comprend du noir de carbone à concurrence de moins de 20 phr ; ou
(iii) comprend du noir de carbone à concurrence de moins de 10 phr ; ou
(iv) comprend du noir de carbone dans la plage de 5 à 35 phr ; ou
(v) comprend du noir de carbone dans la plage de 10 à 30 phr ; ou
(vi) ne contient pas de noir de carbone.

10. Composant de bandage pneumatique selon au moins une des revendications précédentes, dans lequel la silice est de la silice précipitée.

11. Procédé de confection d'un bandage pneumatique comprenant un composant de bandage pneumatique selon au moins une des revendications précédentes, le procédé comprenant le fait de :
(i) mélanger le composé de caoutchouc ;
(ii) former le composant de bandage pneumatique en utilisant le composé de caoutchouc ; et
(iii) inclure le composant de bandage pneumatique dans un bandage pneumatique.
